# EUROPÄISCHE PATENTSCHRIFT

(11) **EP 1 875 106 B1**
(45) Veröffentlichungstag und Bekanntmachung des Hinweises auf die Patenterteilung: **28.09.2011**
(21) Anmeldenummer: 06706715.7
(22) Anmeldetag: 07.02.2006
(51) Int. Cl.: F16H 7/12

(54) **SPANNVORRICHTUNG FÜR EINEN ZUGMITTELTRIEB**
TENSIONING DEVICE FOR A TRACTION DRIVE
DISPOSITIF DE SERRAGE POUR MECANISME DE TRACTION

(30) Priorität: 22.04.2005 DE 102005018849
(43) Veröffentlichungstag der Anmeldung: 09.01.2008
(73) Patentinhaber: Schaeffler Technologies GmbH & Co. KG, 91074 Herzogenaurach (DE)
(72) Erfinder: GRABOSCH, Thomas, 91341 Röttenbach (DE); FLIEDNER, Thomas, 91315 Höchstadt/aisch (DE)
(86) Internationale Anmeldenummer: PCT/EP2006/001071
(87) Internationale Veröffentlichungsnummer: WO 2006/114143

(56) Entgegenhaltungen:
- EP-A- 0 456 142
- WO-A-01/96762
- DE-A1- 19 729 994
- US-A- 5 919 107
- US-A1- 2004 097 311
- PATENT ABSTRACTS OF JAPAN Bd. 012, Nr. 267 (M-722), 26. Juli 1988 (1988-07-26) -& JP 63 047551 A (MITSUBISHI MOTORS CORP; others: 01), 29. Februar 1988 (1988-02-29)
- PATENT ABSTRACTS OF JAPAN Bd. 1995, Nr. 01, 28. Februar 1995 (1995-02-28) -& JP 06 294454 A (BANDO CHEM IND LTD), 21. Oktober 1994 (1994-10-21)

## Beschreibung

### Gebiet der Erfindung

Die vorliegende Erfindung bezieht sich auf eine Spannvorrichtung für einen Zugmitteltrieb, vorzugsweise einen Ketten- oder Riementrieb einer Brennkraftmaschine. Der Aufbau der Spannvorrichtung umfasst einen Tragkörper, der zur Bildung eines Einstellexzenters, eine außermittige Längsbohrung für ein Befestigungsmittel aufweist. Auf dem im Einbauzustand drehfixierten Einstellexzenter ist ein Arbeitsexzenter drehbar angeordnet, welcher in Verbindung mit einem Wälzlager von einer Spannrolle umschlossen ist, die im Einbauzustand der Spannvorrichtung kraftschlüssig an einem Zugmittel abgestützt ist. Zur Kraftbeaufschlagung des Arbeitsexzenters ist ein Federmittel, insbesondere eine Torsionsfeder vorgesehen, die mit einem Federende drehfest an einem mit dem Einstellexzenter verbundenen Grundplatte und über das weitere Federende mit dem Einstellexzenter verbunden ist.

### Hintergrund der Erfindung

Heute eingesetzte Brennkraftmaschinen umfassen überwiegend einen Aggregatetrieb und einen Steuertrieb. Der Aggregatetrieb ist zum Antrieb einzelner Aggregate der Brennkraftmaschine, wie beispielsweise Generator, Klimakompressor oder Lenkhilfspumpe vorgesehen. Mit einem weiteren als Steuertrieb bezeichneten Zugmitteltrieb, wird die Nockenwelle der Brennkraftmaschine angetrieben. Zur Erzielung einer ausreichenden Vorspannung des Zugmittels dient eine Spannvorrichtung, die insbesondere im Leertrum des Zugmitteltriebs eingesetzt ist und selbsttätig das Zugmittel so vorspannt, dass ein möglichst schlupffreier Antrieb des als Riemen gestalteten Zugmittels gewährleistet ist bzw. ein Zahnsprung bei einem als Zahnriemen ausgebildeten Zugmittel vermieden wird.

Aus der DE 93 18 878.1 U1 ist eine Spannvorrichtung bekannt, deren Tragkörper bzw. Einstellexzenter über einen Flansch an einem ortsfesten Maschinenteil, beispielsweise dem Gehäuse einer Brennkraftmaschine abgestützt und mittels einer Schraube drehfest befestigt ist. Zur Erzielung einer kraftschlüssig vorgespannten Anlage der Spannrolle an dem Zugmittel ist eine Torsionsfeder zwischen dem Flansch des Einstellexzenters und dem Arbeitsexzenter vorgesehen. Auf der von dem Flansch des Einstellexzenters abgewandten Seite ist der Arbeitsexzenter axial über einen Bord eines Gleitlagers an einer stirnseitig dem Einstellexzenter zugeordneten Profilscheibe abgestützt ist. Die außenseitig einen Sechskant bildende, an dem Einstellexzenter lagefixierte Profilscheibe ist in Verbindung mit einem Einstellwerkzeug verstellbar, wodurch gleichzeitig der Einstellexzenter positioniert werden kann. Zur drehfixierten Befestigung ist Einstellexzenter an der Stirnseite mit zwei axial vorstehenden, zylindrisch geformte Mitnehmern versehen, die in entsprechende Bohrungen der Profilscheibe eingreifen. Die Darstellung dieser Mitnehmer erfordert einen großen mechanischen Aufwand, der die Herstellkosten erhöht. Weiterhin besteht die Gefahr einer Beschädigung der Mitnehmer, wodurch eine Montage der Profilscheibe eine aufwändige Nacharbeit erfordert. Bei der bekannten Spannvorrichtung- ist die Torsionsfeder zwischen einem Maschinenteil, an dem die Spannvorrichtung befestigt ist und der Laufrolle der Spannvorrichtung positioniert. Dadurch stellt sich ein relativ großer axialer Abstand zwischen der Laufrolle und dem Maschinenteil ein. Gleichzeitig nimmt dieser axiale Abstand unmittelbar Einfluss auf die axiale Beabstandung der Zugmittellage bzw. Zugmittelführung und beeinflusst gleichzeitig den erforderlichen Bauraum des Zugmitteltriebs. Die, JP 63-47551 wird als nächt liegenden Stand der Technik angesehen.

### Aufgabe der Erfindung

Aufgabe der vorliegenden Erfindung ist es daher, eine Spannvorrichtung nach den Merkmalen des Oberbegriffs des Anspruchs 1 anzugeben, deren bauteiloptimierter Aufbau kostengünstig herstellbar ist und der weiterhin einen bauraumoptimierten Zugmitteltrieb ermöglicht.

Zur Lösung dieser Problemstellung ist der Einstellexzenter ausschließlich über eine Stirnfläche an dem ortsfesten Maschinenteil, insbesondere einem Gehäuse der Brennkraftmaschine abgestützt und mittels einer Verschraubung befestigt ist. Das Federmittel der Spannvorrichtung ist in Verbindung mit der Grundplatte der Spannvorrichtung auf der dem Maschinenteil abgewandten Seite des Arbeitsexzenters bzw. der Laufrolle positioniert. Zur Schaffung einer sicheren dauerhaften Drehfixierung des Einstellexzenters mit der Grundplatte weist eines dieser Bauteile ein von einer Kreisform abweichend gestaltetes Verbindungselement auf, das im Einbauzustand in eine Aufnahme des zugehörigen weiteren Bauteils formschlüssig eingreift. Dazu sind die Querschnittsformen des Verbindungselement und der Aufnahme korrespondierend gestaltet.

Die erfindungsgemäße Befestigungsart, mittels formschlüssig ineinander eingepassten Querschnitte der Aufnahme und des Verbindungselementes gewährleistet, dass die Bauteile, der Einstellexzenter und die Grundplatte drehstarr verbunden sind. Diese keine zusätzlichen Bauteile erfordernde Befestigung verringert den Bauteileumfang der Spannvorrichtung. Vorteilhaft erfolgt die Verdrehsicherung der Grundplatte gegenüber dem Einstellexzenter mit nur einem Verbindungselement in Verbindung mit einer Aufnahme. Die von einer Kreisform abweichenden, formschlüssig ineinander eingepassten Querschnitte sind kostengünstig ohne eine zusätzliche spanende Nachbehandlung herstellbar. Nach der Montage des Einstellexzenters mit der Grundplatte, erfolgt zur Erzielung einer verliergesicherten, dauerfesten d.h. prozesssicheren Befestigung eine Verstemmung oder Vernietung zwischen dem Verbindungselement und der Aufnahme.

Die erfindungsgemäße Spannvorrichtung vereinfacht entscheidend die Montage, da diese ausschließlich über eine Anlagefläche des Einstellexzenters an dem ortsfesten Maschinenteil abgestützt ist. Keinerlei weitere bzw. zusätzliche Bauteile der Spannvorrichtung verrasten in örtliche Ausnehmungen des Maschinenteils, die beispielsweise eine automatisierte Montage der Spannvorrichtung erschweren.

Ein entscheidender Bauraumvorteil der Spannvorrichtung gemäß der Erfindung wird durch eine Einbaulage des Federmittels auf der dem Maschinenteil abgewandten Seite des Arbeitsexzenters realisiert. Dieser konstruktive Aufbau ermöglicht einen gewünschten geringen axialen Abstand zwischen der Spannrolle bzw. Laufscheibe und dem ortsfesten Maschinenteil, beispielsweise einem Gehäuse der Brennkraftmaschine. Damit verbunden, kann das Zugmittel in einem geringen axialen Abstand zu dem Maschinenteil geführt werden, was zu einem gewünschten, bauraumoptimierten Aufbau des gesamten Zugmitteltriebs führt.

Weitere vorteilhafte Ausgestaltungen der Erfindung sind Gegenstand der abhängigen Ansprüche 2 bis 15.

Eine bevorzugte Ausgestaltung der Erfindung sieht vor, den Einstellexzenter mit einem axial vorstehenden, gestuften Ansatz zu versehen. Ein derartiger, von der Kreisform abweichender Ansatz kann dabei kostengünstig in Verbindung mit dem eingesetzten spanlosen Verfahren zur Herstellung des Einstellexzenters realisiert werden.

Das Verbindungselement der Spannvorrichtung bildet erfindungsgemäß vorteilhaft einen V-förmig ausgebildeten Ansatz bzw. Zapfen, der formschlüssig in die entsprechend korrespondierend gestaltete Aufnahme der Grundplatte eingepasst ist. Diese Formgebung des Verbindungselementes gewährleistet eine gewünschte dauerhafte Verdrehsicherung und ermöglicht außerdem eine vereinfachtes Zusammenfügen der Grundplatte mit dem Einstellexzenter.

Eine weitere vorteilhafte Ausgestaltung der Erfindung sieht vor, den Einstellexzenter mit einem polygonartig geformten Verbindungselement zu versehen, das mit einer entsprechend gestalteten Aufnahme in der Grundplatte formschlüssig zusammenwirkt.

Neben den zuvor genannten Ausgestaltungen, schließt die Erfindung ebenfalls ein quadratisch gestaltetes, einen angeflachten Kreisquerschnitt bildendes, ein dreieckförmig oder ein Vielzahn- bzw. Vielkeilprofil aufweisende Verbindungselement ein. Folglich schließt die Erfindung alle spanlos herstellbaren Formgebungen bzw. Querschnittsprofile für das Verbindungselement ein, die eine drehstarre Koppelung des Einstellexzenters mit der Grundplatte sicherstellen.

Die Spannvorrichtung kann erfindungsgemäß zur Erzielung einer formschlüssigen Verbindung der Grundplatte mit dem Einstellexzenter außerdem mit einem spanlos herstellbaren Verbindungselement versehen werden, bei dem ein radial und / oder axial vorstehender Ansatz im Bereich der zentrischen Ausnehmung der Grundplatte in eine zugehörige Nut bzw. Aufnahme des Einstellexzenters verrastet.

Gemäß der Erfindung ist für die Herstellung des Einstellexzenters ein pulvermetallurischer Herstellprozess, insbesondere sintern vorgesehen, mit dem das Bauteil ohne jegliche Nacharbeit einschließlich des Verbindungselementes herstellbar ist. Alternativ dazu eignet sich ein als Gussteil gestalteter Einstellexzenter. Auch für das beispielsweise als Feingussteil ausgebildete Bauteil entfällt nach dem Abguss jegliche spanende Nacharbeit. Weiterhin schließt die Erfindung zur Herstellung des Einstellexzenters ein Fließpressverfahren ein.

Für die Herstellung-der Grundplatte eignet sich bevorzugt ein Tiefziehverfahren mit dem aus stahlblech die Grundplatte spanlos herstellbar ist Während des Herstellverfahrens kann beispielsweise durch Stanzen die Ausnehmung oder das Verbindungselement ausgebildet werden. Die großflächige Ausführung der Grundplatte und die günstige Lage des Flächenschwerpunktes ermöglichen eine robuste Gestaltung des Umformwerkzeuges und gewährleisten gleichzeitig längere Werkzeugstandzeiten, was sich vorteilhaft auf die Herstellkosten auswirkt.

Das erfindungsgemäße Verbindungselement kann erfindungsgemäß so gestaltet werden, dass sich eine lageorientierte Einbaulage der Grundplatte gegenüber dem Einstellexzenter ergibt. Ein derartig ausgebildetes Verbindungselement verhindert eine Fehlmontage und gewährleistet eine für die Funktion der Spannvorrichtung erforderliche definierte Lageposition der Grundplatte gegenüber dem Einstellexzenter.

Das vorzugsweise als Torsionsfeder ausgebildete Federmittel ist mit einem Federende über einen sogenannten Winkelring an der Grundplatte abgestützt. Zur Erzielung einer verliergesicherten Befestigung ist der Winkelring an einem gestuften Abschnitt der Grundplatte lagefixiert, beispielsweise über einen Pressitz. Diese verliergesicherte Positionierung des Winkelrings stellt einen Kostenvorteil dar, aufgrund einer vereinfachten automatengerechten Montage.

Alternativ umfasst die Erfindung ein Halteelement, bei dem die Grundplatte einstückig mit dem Winkelring verbunden ist. Dazu eignet sich beispielsweise eine Klebung, zur stoffschlüssigen Verbindung beider Bauteil. Das Halteelement gemäß der Erfindung kann weiterhin einteilig, beispielsweise als ein Spanlosteil ausgebildet werden.

Die Grundplatte ist bevorzugt mit einer Werkzeugaufnahme versehen, beispielsweise in Form eines Innensechskants, in das ein Einstellwerkzeug einsetzbar ist. Damit kann der Einstellexzenter positioniert werden, bevor dieser mittels des Befestigungsmittels, einer Verschraubung, gegenüber dem Maschinenteil lagefixiert wird.

Zur Erzielung einer prozesssicheren Montage der Grundplatte an dem Einstellexzenter wird bevorzugt das einstückig mit dem Einstellexzenter in Verbindung stehende Verbindungselement, ein axial vorstehender Ansatz gegenüber der Aufnahme der Grundplatte verstemmt. Aufgrund der Robustheit des erfindungsgemäßen Verbindungselementes eignet sich eine Verstemmung mit einem relativ großen radialen Übermaß, zur Erzielung einer ausreichenden Hattekraft der Sicherung. Aufgrund der von einer Kreisform abweichenden Form des Verbindungselementes in Verbindung mit der Verstemmung kann eine prozesssichere Montage einschließlich einer ausreichenden Verdrehsicherung realisiert werden.

Alternativ zu einer Verstemmung oder auch Vernietung der Bauteile schließt die Erfindung eine stoffschlüssige Sicherung, beispielsweise eine Verschweißung zwischen dem Einstellexzenter und der Grundplatte im Bereich des Verbindungselementes und der Aufnahme ein.

### Kurze Beschreibung der Zeichnung

Ausführungsbeispiele der Erfindung sind in den Zeichnungen dargestellt, die nachfolgend beschrieben werden. Es zeigen:
- Figur 1: in einer Schnittdarstellung den Aufbau einer erfindungsge- mäßen Spannvorrichtung im Einbauzustand;
- Figur 2: in einer Einzelteilansicht den Einstellexzenter der Spann- vorrichtung;
- Figur 3: die Grundplatte der Spannvorrichtung als Einzelteilzeich- nung;
- Figur 4: die Bauteile Einstellexzenter und Grundplatte zusammen- gefügt als eine Baueinhelt;
- Figur 5: ein Halteelement, das die Bauteile Grundplatte und Winkel- ring umfasst;
- Figur 6: in einer Perspektive die Spannvorrichtung gemäß Figur 1.

### Detaillierte Beschreibung der Zeichnungen

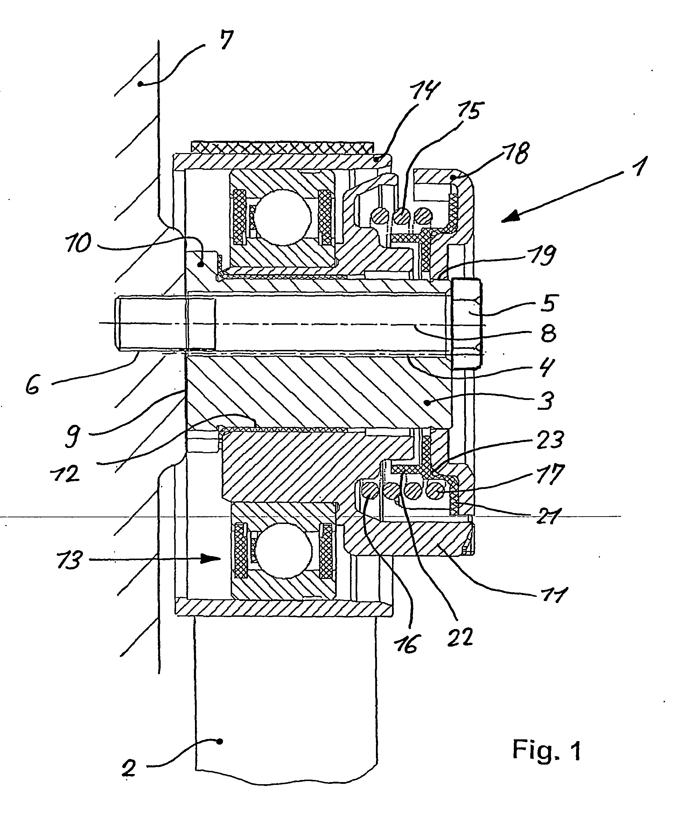

Die in Figur 1 im Einbauzustand abgebildete Spannvorrichtung 1 ist kraftschlüssig an einem Zugmittel 2 eines in Figur 1 nicht dargestellten Zugmitteltriebs abgestützt. Der Aufbau der Spannvorrichtung 1 umfasst einen Einstellexzenter 3, in dessen außermittig, exzentrisch angeordnete Längsbohrung 4 ein Befestigungsmittel 5, eine Schraube, eingesetzt ist, die in einem Gewinde 6 eines ortsfesten Maschinenteils 7, beispielsweise dem Gehäuse einer Brennkraftmaschine verschraubt ist. Zur Erzielung einer Grundeinstellung ist der Einstellexzenter 3 bei gelöstem Befestigungsmittel 5 um eine Drehachse 8 schwenkbar und in einer gewünschten Position mittels des Befestigungsmittels 5 lagefixierbar. Dabei stützt sich der Einstellexzenter 3 über einen Flansch 10 mit einer Stirnfläche 9 an dem Maschinenteil 7 ab. Auf einer Mantelfläche 24 des außenseitig zylindrisch gestalteten Einstellexzenters 3 ist ein Arbeitsexzenter 11 über eine Gleitlagerbuchse 12 drehbar positioniert. Ein dem Arbeitsexzenter 11 zugeordnetes Wälzlager 13 wird außenseitig von einer Spannrolle 14 bzw. Laufrolle umschlossen, die im Einbauzustand der Spannvorrichtung 1 mit dem Zugmittel 2 zusammenwirkt.

Zur Erzielung einer Kraftkomponente, die den Arbeitsexzenter 11 in eine das Zugmittel 2 vorspannende Position verdreht, dient ein als Torsionsfeder ausgebildetes Federmittel 15, das konzentrisch zu der Drehachse 8 in der Spannvorrichtung 1 integriert ist. Das Federmittel 15 ist mit einem ersten Ende 16 an dem Arbeitsexzenter 11 und mit einem zweiten Ende 17 an einer Grundplatte 18 fixiert. Bedingt durch die Anordnung des Federmittels 15 auf der vom Maschinenteil 7 abgewandten Seite der Spannvorrichtung 1 kann das Zugmittel 2 in einem relativ geringen axialen Abstand zu dem Maschinenteil 7 geführt werden.

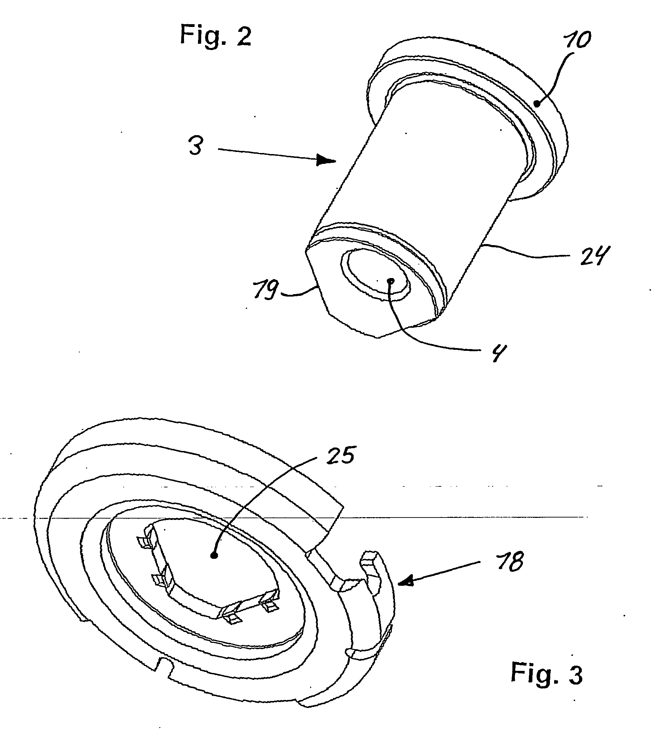

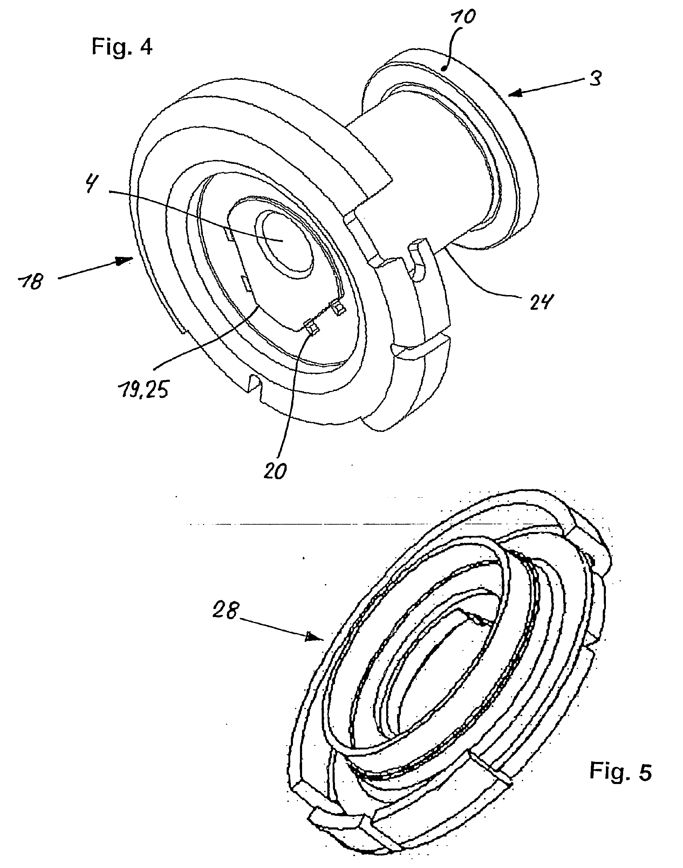

Die vorzugsweise mittels eines Tiefziehverfahrens aus Stahlblech hergestellte Grundplatte 18 ist über ein in Figur 2 detailliert dargestelltes Verbindungselement 19 drehstarr gegenüber dem Einstellexzenter 3 positioniert und mittels einer Verstemmung 20, wie in Figur 4 dargestellt, verliergesichert. Ein der Grundplatte 18 zugeordneter, aus Kunststoff hergestellter Winkelring 21 bewirkt in Verbindung mit einem zylindrischen Ansatz 22 eine Zentrierung bzw. Führung des Federmittels 15. Dabei ist der Winkelring 21 an einem gestuften Abschnitt 23 der Grundplatte 18 lagefixiert, zur Erzielung einer verliergesicherten Anordnung. Damit bildet der Winkelring 21 in Verbindung mit der Grundplatte 18 eine Baueinheit, wodurch eine verliergesicherte Anordnung entsteht, die beispielsweise eine Montage des Federmittels 15 vereinfacht.

Die Figur 2 zeigt den Einstellexzenter 3 als Einzelteil in einer Perspektive und verdeutlicht damit insbesondere den Aufbau des Verbindungselementes 19. Das sich an die Mantelfläche 24 stirnseitig anschließende Verbindungselement 19 weist einen von einer Kreisform abweichenden Querschnitt auf und bildet dabei einen gegenüber der Mantelfläche 24 axial vorstehenden, gestuften Ansatz. In der Einbaulage greift das Verbindungselement 19 formschlüssig in eine korrespondierend gestaltete in Figur 3 gezeigte Aufnahme 25 der Grundplatte 18 ein. Die geometrische Gestaltung des Verbindungselementes 19 verbunden mit der entsprechend ausgebildeten Aufnahme 25 gewährleistet eine wirksame, für die Funktion der Spannvorrichtung 1 erforderliche verdrehgesicherte Anordnung der Bauteile, Einstellexzenter 3 und Grundplatte 19. Durch die Formgebung des Verbindungselementes 19 wird gleichzeitig ein lageorientierter Einbau der Grundplatte 18 gegenüber dem Einstellexzenter 3 sichergestellt, der eine Fehlmontage wirksam vermeidet.

Die Figur 4 zeigt die zu einer Baueinheit zusammengefügten Bauteile, den Einstellexzenter 3 und die Grundplatte 18. Zur Erzieiung einer wirksamen prozesssicheren Fixierung dieser Bauteile wird nach erfolgter Montage eine Verstemmung 20 vorgesehen, bei der eine Materialumformung zwischen dem Verbindungselement 19 und der Grundplatte im Bereich der Aufnahme 25 erfolgt. Bevorzugt wird dazu bei einem gegenüber der Grundplatte 18 vorstehenden Verbindungselement 19 im Bereich der Außenkontur eine nach außen gerichtete Materialumformung durch eine Verstemmung 20 vorgesehen, wodurch eine Überdeckung und damit wirksame Haltesicherung beider Bauteile erreichbar ist.

Die Figur 5 zeigt in einer Perspektive ein Halteelement 28, das eine Alternative zu dem zweiteiligen Aufbau der Grundplatte 18 und des Winkelrings 21bildet. Im Einbauzustand ist das Halteelement 28 verliergesichert an dem Einstellexzenter 3 befestigt.

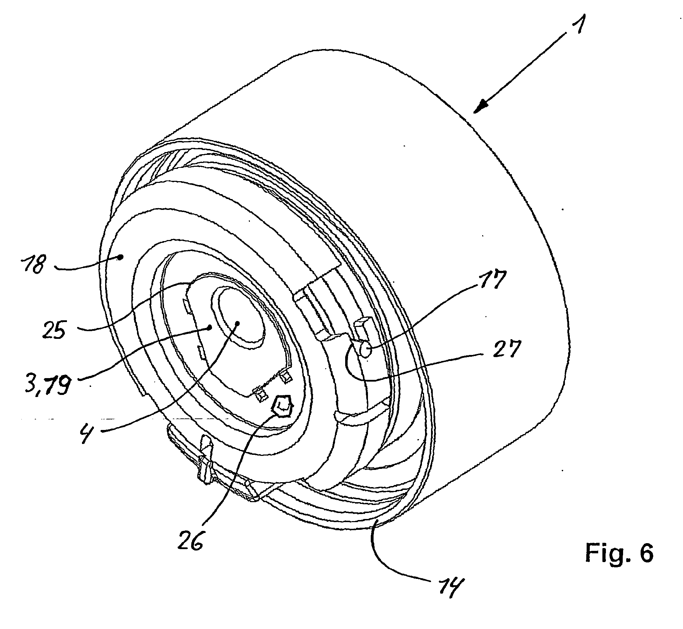

Die gesamte Spannvorrichtung 1 in einer Perspektive ist in Figur 6 abgebildet. Dabei wird beispielsweise die Lagefixierung von dem Ende 17 des Federmittels 15 an der Grundplatte 18 deutlich. Dazu ist in einer Außenkontur der Grundplatte 18 ein Schlitz 27 zur formschlüssigen Aufnahme des Endes 17 vorgesehen. Weiterhin weist die Grundplatte 18 gemäß Figur 5 eine Werkzeugaufnahme 26 auf, in die beispielsweise ein separates Werkzeug mit einem Sechskantprofil eingesetzt werden kann, um eine Grundeinstellung des Einstellexzenters 3 vorzunehmen, bevor anschließend mit dem in Figur 1 abgebildeten Befestigungsmittel 5 die Position des Einstellexzenters 3 fixiert werden kann.

### Bezugszahlen

- 1: Spannvorrichtung
- 2: Zugmittel
- 3: Einstellexzenter
- 4: Längsbohrung
- 5: Befestigungsmittel
- 6: Gewinde
- 7: Maschinenteil
- 8: Drehachse
- 9: Stirnfläche
- 10: Flansch
- 11: Arbeitsexzenter
- 12: Gleitlagerbuchse
- 13: Wälzlager
- 14: Spannrolle
- 15: Federmittel
- 16: Ende
- 17: Ende
- 18: Grundplatte 19 Verbindungselement
- 20: Verstemmung
- 21: Winkelring
- 22: Ansatz
- 23: Abschnitt
- 24: Mantelfläche
- 25: Aufnahme
- 26: Werkzeugaufnahme
- 27: Schlitz
- 28: Halteelement

## Patentansprüche

1. Spannvorrichtung für einen Zugmitteltrieb mit einem Trägerkörper, der zur Bildung eines Einstellexzenters (3) eine außermittige Längsbohrung (4) für ein Befestigungsmittel (5) aufweist, wobei ein Arbeitsexzenter (11) den Einstellexzenter (3) drehbar umschließt, und auf dem Arbeitsexzenter (11) ein Wälzlager (13) sowie eine an einem Zugmittel (2) abgestützte Laufrolle bzw. Spannrolle (14) befestigt ist und ein Federmittel (15) mit einem Ende (17) an einer drehfest mit dem Einstellexzenter (3) verbundenen Grundplatte (18) und das weitere Ende (16) an dem Arbeitsexzenter (11) fixiert ist, **dadurch gekennzeichnet, dass**,
- die Spannvorrichtung (1) unmittelbar über eine Stirnfläche (9) des Einstellexzenters (3) an einem ortsfesten Maschinenteil (7) abgestützt und mit dem Befestigungsmittel (5) lagefixiert ist;
- die axial beabstandet gegenüber dem Arbeitsexzenter (11) angeordnete Grundplatte (18) in Verbindung mit dem Federmittel (15) auf der dem Maschinenteil (7) abgewandten Seite der Spannvorrichtung (1) positioniert ist;
- das Federmittel (15) in einem axial von der Grundelatte (18) und dem Arbeitsexzenter (11) begrenzten Einbauraum eingesetzt ist:
- der Einstellexzenter (3) oder die Grundplatte (18) ein einstückig von einer Kreisform abweichend gestaltetes, spanlos herstellbares Verbindungselement (19) aufweist, das in eine korrespondierende, ohne eine spanende Nachbearbeitung hergestellte Aufnahme (25) des zugehörigen weiteren Bauteils eingreift;
- die formschlüssig ineinander eingepassten Querschnitte der Aufnahme (25) und des Verbindungselementes (19) den Einstellexzenter (3) und die Grundplatte (18) drehstarr verbinden;
- nach einer Montage die Grundplatte (18) mit dem Einstellexzenter (3) verliergesichert befestigt sind.

2. Spannvorrichtung nach Anspruch 1, wobei als Verbindungselement (19) der Einstellexzenter (3) einen axial vorstehenden, gestuften Ansatz einschließt, der mit der korrespondierend geometrisch gestalteten Aufnahme (25) der Grundplatte (18) verdrehgesichert eingreift.

3. Spannvorrichtung nach Anspruch 1, bei dem der Einstellexzenter (3) als Verbindungselement (19) einen V-förmig gestalteten Ansatz einschließt, der formschlüssig mit einer entsprechend gestalteten Aufnahme (25) der Grundplatte (18) zusammenwirkt.

4. Spannvorrichtung nach Anspruch 1, die einen Einstellexzenter (3) mit einem polygonartig geformten Verbindungselement (19) umfasst, der in eine entsprechend ausgebildete Aufnahme (25) der Grundplatte (18) eingepasst ist.

5. Spannvorrichtung nach Anspruch 1, bei dem als Verbindungselement die Grundplatte (18) zumindest einen radial und / oder axial vorstehender Ansatz aufweist, der im Bereich der Ausnehmung formschlüssig in eine zugehörige Nut oder Ausnehmung des Einstellexzenters (3) eingreift.

6. Spannvorrichtung nach Anspruch 1, die einen pulvermetallurgisch hergestellten Einstellexzenter (3) einschließt.

7. Spawnvorrichtung nach Anspruch 1, versehen mit einem als ein Gussteil gestalteten Einstellexzenter (3).

8. Spannvorrichtung nach Anspruch 1, die eine mittels eines Tiefziehverfahrens aus Stahlblech hergestellte Grundplatte (18) umfasst.

9. Spannvorrichtung nach Anspruch 1, deren Grundplatte (18) und deren Einstellexzenter (3), zur Erzielung einer lageorientierten Einbaulage über ein asymmetrisch gestaltetes Querschnittsprofil des Verbindungselementes (19) und der Aufnahme (25) verbunden sind.

10. Spannvorrichtung nach Anspruch 1, die zur Zentrierung und Abstützung des Federmittels (15) einen Winkelring (21) umfasst, der verliergesichert an der Grundplatte (18) fixiert ist.

11. Spannvorrichtung nach Anspruch 10, bei der die Grundplatte (18) einen gestuften Abschnitt (23) bildet, an dem der Winkelring (21) lagefixiert ist.

12. Spannvorrichtung nach Anspruch 1, bei der die einstückig verbundenen Bauteile, die Grundplatte und der Winkelring gemeinsam ein Halteelement (28) bilden.

13. Spannvorrichtung nach Anspruch 1, deren Grundplatte (18) eine Werkzeugaufnahme (26) für ein Einstellwerkzeug aufweist, um eine Grundeinstellung der Spannvorrichtung (1) zu ermöglichen.

14. Spannvorrichtung nach Anspruch 1, bei dem mittels einer Verstemmung (20) oder Vernietung zwischen dem Verbindungselement (19) und der Aufnahme (25) die Bauteile Grundplatte (18) und Einstellexzenter (3) prozesssicher verliergesichert zusammengefügt sind.

15. Spannvorrichtung nach Anspruch 1, die eine stoffschlüssige Sicherung zwischen dem Einstellexzenter (3) und der Grundplatte (18) im Bereich des Verbindungselementes (19) und der Aufnahme (25) vorsieht.

## Claims

1. Tensioning device for a traction element drive, having a carrier body which, to form an adjusting eccentric (3), has an off-centre longitudinal bore (4) for a fastening means (5), wherein a working eccentric (11) rotatably surrounds the adjusting eccentric (3), and a rolling bearing (13) and also a running roller or tensioning roller (14), which is supported on the traction element (2), are fastened on the working eccentric (11), and a spring means (15) is fixed with one end (17) to a base plate (18) connected to the adjusting eccentric (3) for conjoint rotation therewith, and the further end (16) is fixed to the working eccentric (11), **characterized in that**
- the tensioning device (1) is supported directly via an end surface (9) of the adjusting eccentric (3) on a positionally fixed machine part (7) and is fixed in position by the fastening means (5);
- the base plate (18), which is arranged so as to be axially spaced apart from the working eccentric (11), in conjunction with the spring means (15) is positioned on that side of the tensioning device (1) which faces away from the machine part (7);
- the spring means (15) is inserted into an installation space delimited axially by the base plate (18) and by the working eccentric (11);
- the adjusting eccentric (3) or the base plate (18) has an integral connecting element (19) whose design deviates from a circular shape and which can be produced in a non-cutting process and which engages into a corresponding receptacle (25), produced without a cutting reworking process, of the associated further component;
- the cross sections, which fit one into the other in a positively locking manner, of the receptacle (25) and of the connecting element (19) connect the adjusting eccentric (3) and the base plate (18) in a torsionally rigid manner;
- after assembly, the base plate (18) is captively fastened to the adjusting eccentric (3).

2. Tensioning device according to Claim 1, wherein as a connecting element (19), the adjusting eccentric (3) includes an axially protruding stepped projection which engages, in a rotationally locked manner, with the geometrically correspondingly designed receptacle (25) of the base plate (18).

3. Tensioning device according to Claim 1, in which the adjusting eccentric (3) includes, as a connecting element (19), a V-shaped projection which interacts in a positively locking manner with a correspondingly designed receptacle (25) of the base plate (18).

4. Tensioning device according to Claim 1, which comprises an adjusting eccentric (3) with a polygonal connecting element (19) which is fitted into a correspondingly designed receptacle (25) of the base plate (18).

5. Tensioning device according to Claim 1, in which, as a connecting element, the base plate (18) has at least one radially and/or axially protruding projection which, in the region of the recess, engages in a positively locking manner into an associated groove or recess of the adjusting eccentric (3).

6. Tensioning device according to Claim 1, which includes an adjusting eccentric (3) produced by powder metallurgy.

7. Tensioning device according to Claim 1, provided with an adjusting eccentric (3) designed as a cast part.

8. Tensioning device according to Claim 1, which comprises a base plate (18) produced from sheet steel by means of a deep-drawing process.

9. Tensioning device according to Claim 1, the base plate (18) of which and the adjusting eccentric (3) of which are connected, in order to obtain a positionally oriented installation position, by means of an asymmetrically designed cross-sectional profile of the connecting element (19) and of the receptacle (25).

10. Tensioning device according to Claim 1 which, for centring and supporting the spring means (15), comprises an angled ring (21) which is captively fixed to the base plate (18).

11. Tensioning device according to Claim 10, in which the base plate (18) forms a stepped section (23) on which the angled ring (21) is fixed in position.

12. Tensioning device according to Claim 1, in which the integrally connected components, the base plate and the angled ring, together form a retaining element (28).

13. Tensioning device according to Claim 1, the base plate (18) of which has a tool receptacle (26) for an adjusting tool in order to permit a basic adjustment of the tensioning device (1).

14. Tensioning device according to Claim 1, in which, the base plate (18) and adjusting eccentric (3) are captively joined together in a dependable manner by means of a caulked connection (20) or riveted connection between the connecting element (19) and the receptacle (25).

15. Tensioning device according to Claim 1, which provides a cohesive locking action between the adjusting eccentric (3) and the base plate (18) in the region of the connecting element (19) and of the receptacle (25).

## Revendications

1. Dispositif de serrage d'un entraînement de moyen de traction doté d'un corps de support comportant un alésage longitudinal (4) excentré pour un moyen de fixation (5) en vue de former un excentre de réglage (3), un excentre de travail (11) entourant l'excentre de réglage (3) de façon à pouvoir tourner et un palier à rouleau (13) ainsi qu'un galet de roulement et/ou un galet de serrage (14) soutenus au niveau du moyen de traction (2) étant fixés sur l'excentre de travail (11) et un moyen de ressort (15) étant fixé avec une extrémité (17) à une plaque de fond (18) reliée solidairement en rotation avec l'excentre de réglage (3) et l'autre extrémité (16) étant fixée à l'excentre de travail (11), **caractérisé en ce que** :
- le dispositif de serrage (1) est directement soutenu au niveau d'une partie de machine (7) fixe sur place via une surface frontale (9) de l'excentre de réglage (3) et est fixé en place à l'aide du moyen de fixation (5) ;
- la plaque de fond (18) disposée à une certaine distance de l'excentre de travail (11) dans le plan axial est positionnée de façon à être reliée au moyen de ressort (15) sur le côté du dispositif de serrage (1) opposé à la partie de machine (7) ;
- le moyen de ressort (15) est inséré dans un espace délimité dans le plan axial par la plaque de fond (18) et l'excentre de travail (11) ;
- l'excentre de réglage (3) ou la plaque de fond (18) comportent un élément de liaison (19) pouvant être réalisé sans enlèvement de copeaux et réalisé d'un seul tenant de façon à s'écarter d'une forme de cercle, ledit élément s'engrenant dans un logement (25) correspondant, fabriqué sans retouche avec enlèvement de copeaux de l'autre composant associé ;
- les sections transversales du logement (25) et de l'élément de liaison (19) emboîtées les unes dans les autres par complémentarité de formes relient de façon rigide en rotation l'excentre de réglage (3) et la plaque de fond (18) ;
- après montage, la plaque de fond (18) est fixée de façon imperdable à l'excentre de réglage (3).

2. Dispositif de serrage selon la revendication 1, l'excentre de réglage (3) servant d'élément de liaison (19) renfermant un appendice échelonné saillant dans le plan axial qui s'engrène sans torsion possible avec le logement (25) de forme correspondante de la plaque de fond (18).

3. Dispositif de serrage selon la revendication 1, dans lequel l'excentre de réglage (3) renferme, en tant qu'élément de liaison (19), un appendice en V qui interagit par complémentarité de formes avec un logement (25) agencé de façon correspondante de la plaque de fond (18).

4. Dispositif de serrage selon la revendication 1, qui comprend un excentre de réglage (3) doté d'un élément de liaison (19) polygonal qui s'encastre dans un logement (25) réalisé de façon correspondante de la plaque de fond (18).

5. Dispositif de serrage selon la revendication 1, dans lequel la plaque de fond (18) servant d'élément de liaison comporte au moins un appendice saillant dans le plan radial et / ou dans le plan axial qui s'engrène par complémentarité de formes dans une rainure associée ou un évidement de l'excentre de réglage (3) dans la zone de l'évidement.

6. Dispositif de serrage selon la revendication 1, qui intègre un excentre de réglage (3) fabriqué par métallurgie des poudres.

7. Dispositif de serrage selon la revendication 1, pourvu d'un excentre de réglage (3) prenant la forme d'une pièce brute de fonderie.

8. Dispositif de serrage selon la revendication 1, comprenant une plaque de fond (18) fabriquée en tôle d'acier par le biais d'un procédé d'emboutissage.

9. Dispositif de serrage selon la revendication 1, dont la plaque de fond (18) et l'excentre de réglage (3) sont reliés via un profilé asymétrique en section transversale de l'élément de liaison (19) et du logement (25) pour atteindre une position de montage orientée dans son positionnement.

10. Dispositif de serrage selon la revendication 1, comprenant un anneau d'angle (21) fixé de façon imperdable à la plaque de fond (18) pour permettre de centrer et de soutenir le moyen de ressort (15).

11. Dispositif de serrage selon la revendication 10, dans lequel la plaque de fond (18) forme une section (23) échelonnée au niveau de laquelle l'anneau d'angle (21) est fixé sur place.

12. Dispositif de serrage selon la revendication 1, dans lequel les composants reliés d'un seul tenant, la plaque de fond et l'anneau d'angle forment ensemble un élément d'arrêt (28).

13. Dispositif de serrage selon la revendication 1, dont la plaque de fond (18) comporte un logement d'outil (26) prévu pour un outil de réglage, pour permettre de réaliser un réglage de base du dispositif de serrage (1).

14. Dispositif de serrage selon la revendication 1, dans lequel les composants que sont la plaque de fond (18) et l'excentre de réglage (3) sont assemblés de façon sécurisée sur le plan du procédé et imperdable, par matage (20) ou rivetage entre l'élément de liaison (19) et le logement (25).

15. Dispositif de serrage selon la revendication 1, ledit dispositif prévoyant une protection réalisée par complémentarité de matières entre l'excentre de réglage (3) et la plaque de fond (18) dans la zone de l'élément de liaison (19) et du logement (25).
